# EUROPEAN PATENT APPLICATION

(11) **EP 2 267 627 A1**
(43) Date of publication of application: **29.12.2010**
(21) Application number: 10164817.8
(22) Date of filing: 03.06.2010
(51) Int. Cl.: G06F 21/00, G06Q 30/00

(54) **System and method for media distribution on social networks**

(30) Priority: 22.06.2009 US 219078 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

An apparatus and method for distributing media via an exchange club or social networking site effects or includes the process of identifying a member by authenticating a unique device identifier received from the user's computing device when accessing the social networking site, enabling the member to select one or more media for sharing or broadcasting to other members of the site using information obtained from the site, enabling members to select or enter contact information of friends with whom the user would like to share the media or information about the media, and rewarding the member for any purchase of the media resulting from the broadcasting.

## Description

This application claims priority to U.S. Provisional Application No. 61/219,078 which was filed June 22, 2009 and which is fully incorporated herein by reference.

### BACKGROUND

### Field of the Invention

The present invention is directed toward systems for staring media, and more particularly techniques for sharing and distributing video games.

### Description of the Related Art

Media, such as software (e.g., computer/video games) and music, are typically sold on a physical medium like an optical disc. This form of media distribution is commonly practiced, but prone to piracy. Software and music piracy continue to increase at an alarming rate, particularly in countries with emerging economies. To prevent or reduce piracy, software developers require the software CD to be present in the CD drive in order for the software to fully execute or be functional. Still, software pirates have found ways to bypass such security measures and to install unauthorized copies of media on multiple machines. Accordingly, it would be desirable to provide a technique for monitoring which and how many devices a given media been played/installed on, and for enforcing the terms of a media license based on information regarding which devices the given media been has been played on.

### SUMMARY OF THE INVENTION

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with a system for sharing media on a social network, the method comprising: receiving a member identifier from a device; determining a membership status of the member using the member identifier; accessing a social networking site using login information provided by the member; and broadcasting an advertisement of a media to contacts of member using the third party social networking site.

The method may further comprise rewarding the member for any purchase of the media because of the broadcasting. The broadcasted advertisement may be in the form of a blog entry about the media. Alternatively, the broadcasted advertisement may be in the form of an email about the media. Each of the blog and email may contain a link to the media. The media may comprise one or more items such as of music, software applications, movies, books, etc. The social networking site is a third party social networking site such as an email service (e.g., hotmail, yahoo), Facebookt®, MySpace®, Linkedin®, or other similar site.

In one embodiment of the present invention, the method may also include the step of: receiving a device identifier from the device; and determining the membership status using the device identifier, wherein the device identifier is generated using one or more parameters of the device. Additionally, the method may include the step of enabling the member to select one or more media from a list for the broadcasting of advertisement. For example, if the user selects 5 media to be broadcasted, then a blog or email may be created for each of the selected media. Alternatively, a single blog or email may contain links to each of the selected media.

In accordance with one or more embodiments of the present invention, an apparatus for sharing media is provided. The apparatus may include: means for receiving a member identifier and a device identifier from a device; means for determining a membership status of the member using the member identifier; means for accessing a third party social networking site using login information provided by the member; and means for broadcasting an advertisement of a media to contacts of member using the third party social networking site.

In accordance with yet another embodiment of the present invention a computer readable medium is provided. The computer readable medium having stored thereon, computer executable instructions that, if executed by a device, cause the device to perform a method comprising: receiving a member identifier from a device; determining a membership status of the member using the member identifier; accessing a social networking site using login information provided by the member; and broadcasting an advertisement of a media to contacts of member using the social networking site.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

The present invention, in accordance with one or more various embodiments, is described in detail with reference to the following figures. The drawings are provided for purposes of illustration only and merely depict typical or example embodiments of the invention. These drawings are provided to facilitate the reader's understanding of the invention and shall not be considered limiting of the breadth, scope, or applicability of the invention.

FIG. 1 illustrates an exemplary environment with which the media sharing method can be implemented according to one embodiment of the present invention.

FIG. 2 illustrates the components of an exemplary device identifier.

FIGS. 3-6 illustrate exemplary operational flow diagrams of media sharing methods according to one or more embodiments of the present invention.

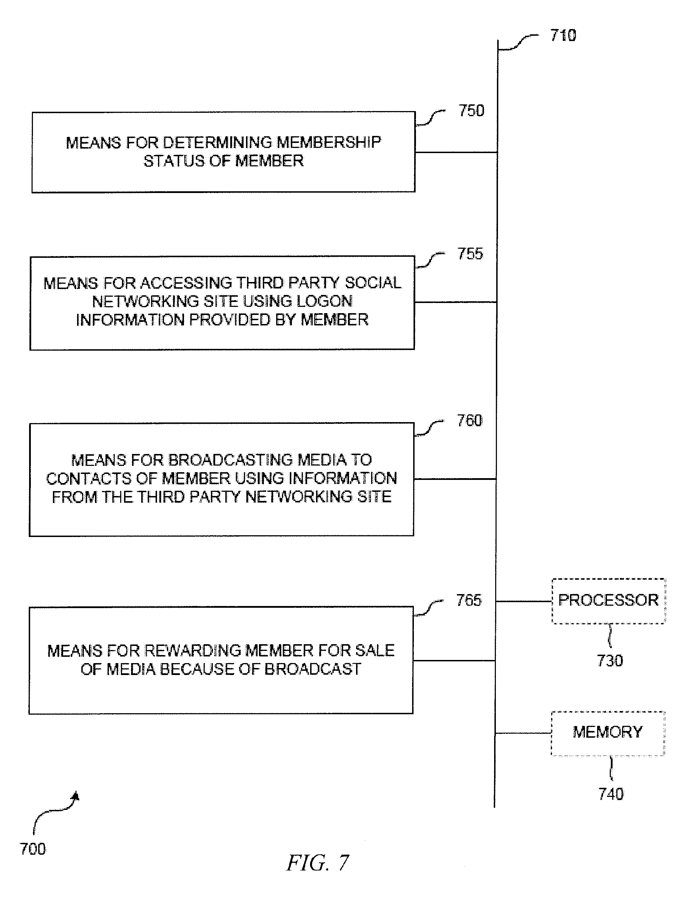

FIGS. 7-9 illustrate exemplary computing systems with which software components can be executed to perform the media sharing method according to one or more embodiments of the present invention.

### DETAILED DESCRIPTION

The present technology provides for a system and method for sharing and advertising media such as software, books, music, and movies. In accordance with one aspect of the present technology, there is provided a system and method for sharing media via an exchange club. After a media is purchased, the method or system of the present invention may solicit the purchaser to join an exchange club if the purchaser (user) is not already a member of the exchange club. For simplicity, only an exemplary system is briefly described below. However, it is noted that a method and apparatus may be configured to perform similar functions with respect to the system as described below. According to one embodiment of the present invention, the system may identify existing member by authenticating a unique device identifier received from the user's computing device. The system may allow members to select one or more media that the user owns for sharing and/or broadcasting to other members of the exchange club. The system may also allow members to select or enter contact information of friends that the user would like to share the media or information about the media with. This process may be referred to as 'broadcasting' a media.

The system may track responses to the user's broadcast. Additionally, the system may track whether the broadcasted media is downloaded and installed by one or more of the persons receiving the broadcast (hereinafter referred to as targeted customer). The system may also track other data such as license purchase date, identifier of media being purchased, targeted customer personal and financial information, identifier of targeted customer's computing device, name or identifier of the user that made the broadcast. Each broadcast may include information that will allow the system to automatically identify the broadcaster, the date of broadcast, etc.

Additionally, the system may reward the broadcaster if a media is purchased by one of the targeted customers due to the broadcasting activities. The reward may be in the form of cash, member credits, license for use of other media, etc. When a targeted customer purchases a license for the media, he/she may be asked to join the exchange club.

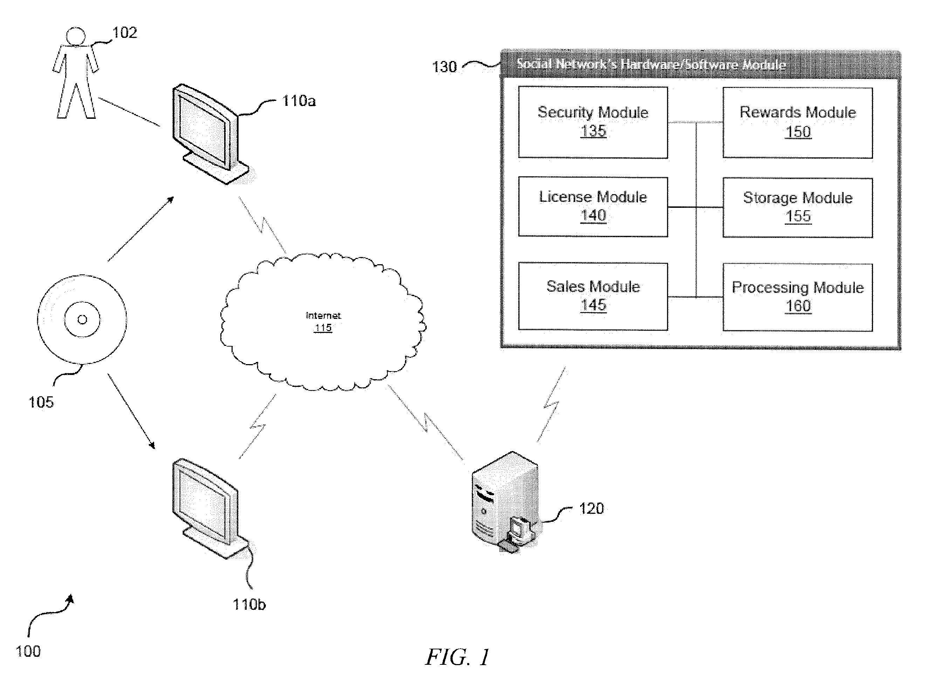

Before describing the invention in detail it is useful to describe an example environment with which the invention can be implemented. Description in terms of this example environment is provided to allow the various features and embodiments of the invention to be portrayed in the context of an exemplary application. After reading this description, it will become apparent to one of ordinary skill in the art how the invention can be implemented in different and alternative environments. FIG. 1 illustrates one of such environments.

FIG. 1 is a diagram illustrating an example environment 100 with which the media sharing method, system, and apparatus is implemented according to one or more embodiments of the present invention. Referring now to FIG. 1, the illustrated example environment 100 includes user 102, a storage medium 105, computing devices 110a and 110b, a network 115, a media management server 120, and a software/hardware module 130. Storage medium 110 may be an optical disc, a memory device (e.g., flash memory), a magnetic storage medium, or other storage device not yet contemplated. Storage medium 110 may contain media content such as books, music, movies, software applications, or any combination thereof. Network 115 may be the Internet, a local area network, or other form of communication network.

Storage medium 105 may be distributed free of charge to user 102. In one embodiment, medium 105 contains various software applications and music that user 102 may install on to user's computing device 405. For examples, medium 105 may contain a "xyz" action movie, as well as a computer game and soundtrack for the "xyz" action movie. Once user 102 inserts medium 105 into user's computing device 110 (e.g., a personal computer, laptop, or gaming device), the media distribution application embedded within medium 105 will give user 102 a choice to install all of the media on medium 105 or just the computer game of the "xyz" action movie, for example. In one embodiment, each of the media on medium 105, once installed, is defaulted to a trial mode. It should be noted that media content can also be downloaded via network 115. For example, user 102 may elect to download a media rather than waiting for the physical medium (i.e., a CD) to arrive in the mail or to purchase one at a store.

In the trial mode, user 102 will be restricted to some of the features and functionalities of the media. For example, if a movie or a song is installed, then user 102 will only be able to view or listen to a portion of the movie or song. If the media is a computer video game, then user 102 will only be able to play a portion of the game. Alternatively or in addition, all functionalities of the media are fully accessible only for a limited number of hours or days. Once the user has purchased the full software, the user may be asked to join the exchange club. Alternatively, the user may be asked to join the exchange club regardless of the license status of the installed media. In this way, the user may broadcast the media that he/she likes but could not afford to purchase at the moment.

Computing devices 110a-b may be in operative communication with media management server 120. While only one computing device 110 is illustrated, it will be understood that a given system may comprise any number of computing devices. Computing device 110 may be, but is not limited to, a game console, a personal computer, a server computer, a laptop computer, a tablet computer, a personal digital assistant, a mobile phone, a wireless communication device, an onboard vehicle computer, or any other device capable of communication with a computer network.

Computing device 110 may contain one or more media (e.g., computer software, music, books, and movies) that require a license to be authorized for use or a key to enable the user to download the media. Computing device 110 may also comprise a security application (not shown) that may comprise a stand alone application or an applet running within a web browser on the device 110 (e.g., an applet comprising executable code for a Java Virtual Machine). Security application may be embedded in or associated with another software application, including but not limited to the media. For example, security application may be embedded in or associated with a tool bar of a software application, such as, for example, a web browser. Alternatively, security application may be installed in conjunction with a media (e.g., software application, books, movies, etc.) that was installed or downloaded onto user's computing device 110. Security application may prompt the user to register with an online software registration service, or may run in the background with little or no interaction with the user of device 110.

The security application may collect information regarding computing device 110 by checking a number of parameters which are expected to be unique to the computing device environment. The parameters checked may include, for example, hard disk volume name, user name, device name, user password, hard disk initialization date, etc. The collected information may include information that identifies the hardware comprising the platform on which the web browser runs, such as, for example, CPU number, or others parameters associated with the firmware in use. The system information may further include system configuration information, such as amount of memory, type of processor, software or operating system serial number, etc.

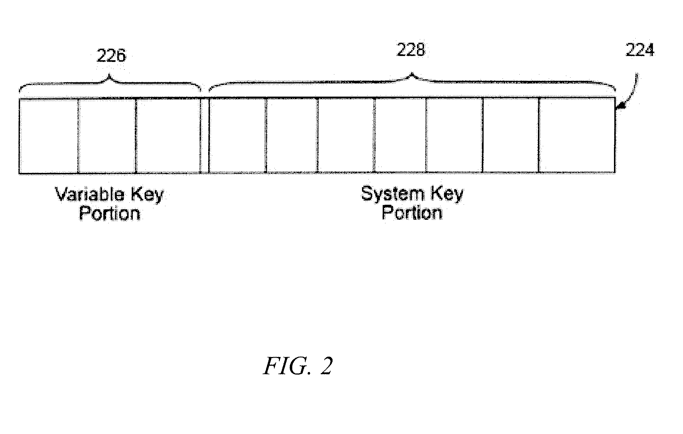

Based on the collected information, security application may generate a device identifier 224 (see FIG. 2) that is unique to the user's computing device 110. The device identifier 224 may be stored in a hidden directory of the device 110 and/or at a remote location, such as the media management server 120. The device identifier 224 may incorporate the device's IP address and/or other geo-location code to add another layer of specificity to device's unique identifier.

It is noted that an application (e.g., the security application) running on the computing device or otherwise having access to the computing device's hardware and file system may generate a unique device identifier (e.g., device identifier 224) using a process that operates on data indicative of the computing device's configuration and hardware. The device identifier may be generated using a combination of user-configurable and non-user-configurable machine parameters as input to a process that results in the device identifier, which may be expressed in digital data as a binary number. Each machine parameter is data determined by a hardware component, software component, or data component specific to the device that the unique identifier pertains to. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier, that has a very high probability of remaining unchanged during normal operation of the target device. Thus, the resulting device identifier should be highly specific, unique, reproducible and stable as a result of properly selecting the machine parameters.

The application for generating the device identifier may also operate on the collected parameters with one or more algorithms to generate the device identifier. This process may include at least one irreversible transformation, such as, for example, a cryptographic hash function, such that the input machine parameters cannot be derived from the resulting device identifier. Each device identifier, to a very high degree of certainty, cannot be generated except by the suitably configured application operating or otherwise having had access to the same computing device for which the device identifier was first generated. Conversely, each identifier, again to a very high degree of certainty, can be successfully reproduced by the suitably configured application operating or otherwise having access to the same computing device on which the identifier was first generated.

The application may operate by performing a system scan to determine a present configuration of the computing device. The application may then select the machine parameters to be used as input for generating the unique device identifier. Selection of parameters may vary depending on the system configuration. Once the parameters are selected, the application may generate the identifier.

Further, generating the device identifier may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

The process of measuring carbon and silicone degradation may be accomplished by measuring a chip's ability to process complex mathematical computations, and its ability to respond to intensive time variable computations. These processes measure how fast electricity travels through the carbon. Using variable offsets to compensate for factors such as heat and additional stresses placed on a chip during the sampling process allows for each and every benchmark to reproduce the expected values. During a standard operating lifetime, the process of passing electricity through the various switches causes a computer chip to degrade. These degradations manifest as gradually slower speeds that extend the processing time required to compute various benchmarking algorithms.

In addition to the chip benchmarking and degradation measurements, the process for generating a device identifier may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device identifier values during transmission and comparisons. Such encryption processes may be used in conjunction with random sampling and key generations.

The device identifier may be generated by utilizing machine parameters associated with one or more of the following: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; Blackbox model; Blackbox serial; Blackbox details; Blackbox damage map; Blackbox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: device model; device model IMEI; device model IMSI; and device model LCD.

The device identifier may also be generated by utilizing machine parameters associated with one or more of the following: wireless 802.11; webcam; game controller; silicone serial; and PCI controller.

With reference to FIG. 2, in one embodiment, the device identifier 224 may include two components - namely, a variable key portion 226 and a system key portion 228. The variable key portion 226 may be generated at the time of registration of computing device 110 by reference to a variable platform parameter, such as via reference to system time information, although other parameters which are variable may be utilized in other embodiments. The system key portion 228 may include the above described parameters expected to be unique to the device 110, such as, for example, hard disk volume name, user name, computer name, user password, hard disk initialization date, or combinations thereof. Portions 226 and/or 228 may be combined with the IP address and/or other platform parameters of the device 110. It is noted that device identifiers, or portions thereof, may be encrypted to add an additional layer of specificity and security.

Referring again to FIG. 1, media management server 120 may comprise a media management module 130, which may include a security module 135, a license module 140, a sales module 145, a rewards module 150, a storage module 155, and a processing module 160. Security module 135 may be configured to authenticate device identifier 224 received from the security application on computing device 110. Sales module 145 may authenticate user's 102 financial data such as credit or debit card number, address, and membership number, if applicable. In one embodiment, device identifier 224 can be used as the membership number.

Security module 135 may check for information which is expected to be unique to the media, such as, for example, the media serial number. The collected media identifier may include the media serial number, product identification number, product key, etc. The collected media identifier may include information regarding where the media was sold or distributed, who the buyers, sellers, and/or distributors were, which stores the media was sold in, etc. It is noted that the media identifier may be unique to particular copy of media, such as when the media is licensed to a single user. In the alternative, or in addition, the media identifier may be unique to particular type or group of a media, such as when the media is licensed to a defined group of users. It should be noted that a media may be a computer software, music, a book, or a movie.

In a scenario, once user 102 has purchased a usage license for a media (e.g., xyz movie) and the payment information is verified, license module 140 may generate a license key for the media. The key may allow the user to fully operate the media or allow the user to download a fully functional copy of the media from server 120.

License module 140 may generate a license key using one or more of the received device and media identifiers. The license key may be generated in ways such that it can be authenticated by the security application residing on user's computing device 110. Once the license key is authenticated by the security application, the full media or full functionalities of the media will be made accessible to user 102. Alternatively, the security application may direct user 102 to download the remaining portion of the media, if a full and/or completely accessible version of the media was not previously installed.

The embodiments described herein comprise a security application (not shown) being executed on computing device 110 that collects or generates a media identifier for media; however, it will be understood that the systems and components described herein can be adapted to collect one or more types of media identifiers for a plurality of media applications. The media identifier may be stored in a hidden directory of the device 110 and/or at a remote location, such as the media management server 120.

The security application of computing device 110 may also include a registration routine that collects or receives information regarding the geo-location code of the device 110. A geo-locater (not shown) may comprise the IP address or the like of the device 110.

The security application may electronically send the device identifier 224 and the media identifier to the media management server 120. In the alternative, or in addition, a geo-location code, such as the IP address of the device 110, may be associated with the device identifier 224 and/or the media identifier and may sent to the media management server 120, such as via a secured network connection. The media management server 120 may encrypt and store the data, such as the device identifier 224, the media identifier 130, and/or the geo-location code, received from the computing device 110. The media management server 120 may receive such data from a plurality of computing devices and store the received data in storage module 155.

In one embodiment, the security application may generate an audit number by associating the media identifier with device identifier 224 and/or the geo-location code, and may send the generated audit number to the media management server 120. In another embodiment, security application of device 110 may send the device identifier 224, the media identifier, and/or the geo-location code to the server 120 in a piecemeal manner. The server 120 may in turn generate the audit number 142. Media management server 120 may receive or generate audit numbers from a plurality of computing devices and store the received audit numbers in the storage module 155.

It is noted that the audit number may be generated from device identifier 224, the media identifier, and/or the geo-location code via any number of suitable approaches. For example, the media identifier may be concatenated or linked with device identifier 224 and/or the geo-location code. It is also noted that the audit number may be stored in a hidden directory of computing device 110 and/or at a remote location, such as the media management server 120. It is further noted that device identifier 224, the media identifier, and/or the geo-location code may be extracted from the audit number 142 at a later time.

When a user of a computing device, including but not limited to computing device 110, installed with the security application, attempts to run the media, the security application in response may transmit the media identifier associated with device identifier 224 and/or the geo-location code (or an audit number 142 generated from such data) to media management server 120, which in turn may store the received data in the storage module 155.

Rewards module 150 may be configured to keep track of all sales. Rewards module 150 records each purchase of a license and collects information such as purchase date, purchase price, media purchased and its identifier, user's 405 financial data, device identifier, etc. Each media contained medium 105 also has a unique media identifier. When a media is broadcasted and is subsequently purchased, rewards module 150 may credit the broadcaster for each sale of the media due to the broadcast. Each broadcast may include a link generated such that the broadcaster identification information is included. Thus each sale from resulting from the link may relate back to the broadcaster. Rewards module 150 may store data it collected using storage module 155.

Rewards may be in the form of credits, cash, or a license to use other media such as music, books, games, and movies. For example, user 102 may be rewarded with a certain number of credits or points. User 102 may convert the credits into cash or a license for another game. This form of reward system may entice users to broadcast frequently about the game and thus may help increase sales of the game.

Current media distribution methods discourage users from sharing the media, particularly when the media is on a physical medium like an optical disc. Based on current systems, if user 102 lends a game disc to a friend, user 102 will be unable to play the game because most games require the disc to be in the device while playing. In the case of music, there is no incentive for users to distribute the optical disc to others because a reward system is not being implemented. In contrast, the reward system of the present invention encourages users to freely broadcast and share the media with others.

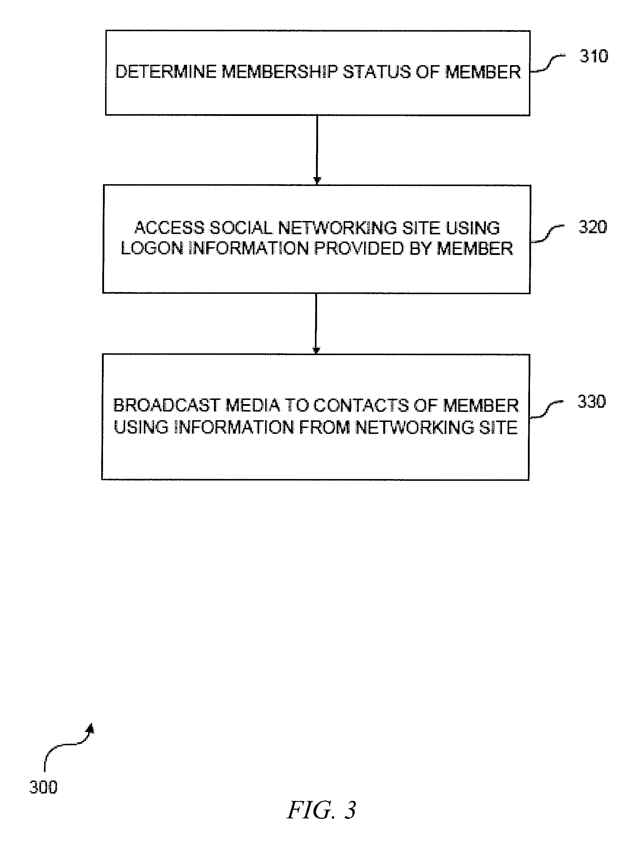

FIG. 3 illustrates an example process flow of a media sharing method 300 according to one embodiment of the present invention. Referring now to FIG. 3, method 300 starts at step 310 where the membership status of the user or the computing device is determined. Step 310 may be performed after a media is installed onto computing device 110. The media may be installed using a physical medium or via a download from server 120. Once the user executes the media, the membership determination process of step 310 may be performed. If the member is not already part of the exchange club, then the member may be asked to join the exchange club.

At step 320, media management server 120 may access one or more social networking sites that the member belongs to. Server 120 may access onto one or more of the social networking sites using login information provided by the member. The social networking site may be a membership site residing on server 120 itself or on the same network. Alternatively, the social networking site may be a third party site such as Facebook®, Myspace®, LinkedIn®, Yahoo, MSN, etc. In one embodiment, the member may specify which social networking site server 120 may or may not access. As mentioned, Server 120 may allow members to select one or more media that the user owns for broadcasting to other members of the exchange club. The system may also allow members to select or enter contact information of friends that the user would like to broadcast about the media.

At step 330, a media is broadcasted using information from the social networking site. The term "broadcasting" may comprise the process of sending out an email, creating a blog entry, creating an entry on Twitter®, or making any form of announcement such as a website posting, pictures, audio, or interactive media feed. For example, if the networking site is a free email service provider, then broadcasting would entail sending out email. If the networking site is similar to Myspace® and Facebook®, then a blog, or message/email, and/or status update may be created during the broadcasting process.

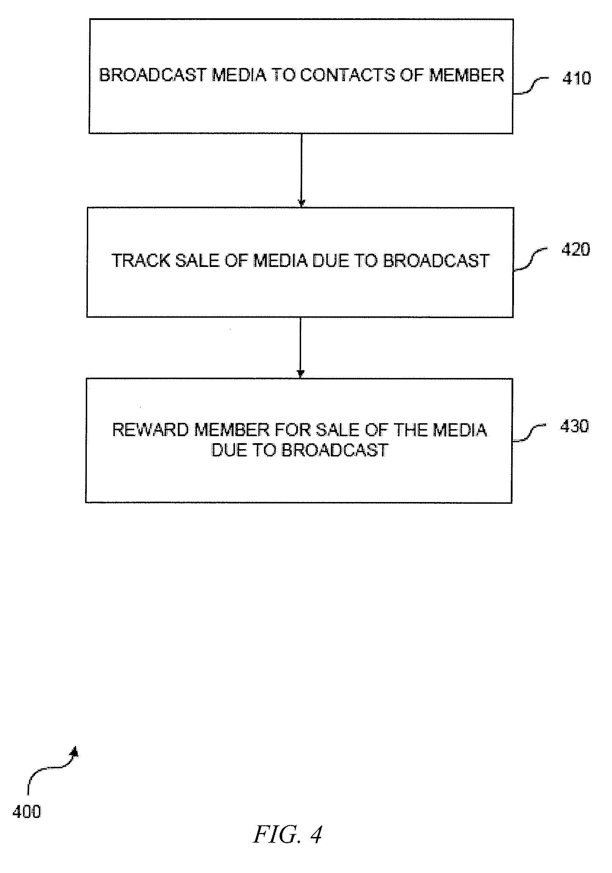

FIG. 4 illustrates an example process flow of a media broadcasting method 400 according to one embodiment of the present invention. Method 400 may be performed in addition to method 300. Referring now to FIG. 4, method 400 starts at step 410 where a media is broadcasted to contacts or friends of the member. In one embodiment, a media may be broadcasted to one or more persons in the member's contact list. Alternatively, the media may be broadcasted to a broadcast list that is maintained by the member. The server may be configured to allow the member to, at any time, add or delete anyone from the broadcast list. The broadcast may comprise a link to the media being advertised or shared. The broadcast may also include embedded data to identify the member making the broadcast, the date of the broadcast, the media identifier, and/or the social network site used to make the broadcast.

At step 420, the sale of the media due to the broadcast is tracked. Tracking may involve keeping records of responses to the member's broadcasts. Additionally, server 120 may track whether the broadcasted media is downloaded and installed by one or more of the persons receiving the broadcast (hereinafter referred to as targeted customer). Server 120 may also track other data such as license purchase date, identifier of media being purchased, targeted customer personal and financial information, identifier of targeted customer's computing device, name or identifier of the user that made the broadcast. Each broadcast may include information that will allow the system to automatically identify the broadcaster, the date of broadcast, etc.

At step 430, the member may be rewarded for a sale of the media due to the broadcast. The reward may be in the form of cash, member credits, license for use of other media, etc. When a targeted customer purchases a license for the media, he/she may be asked to join the exchange club.

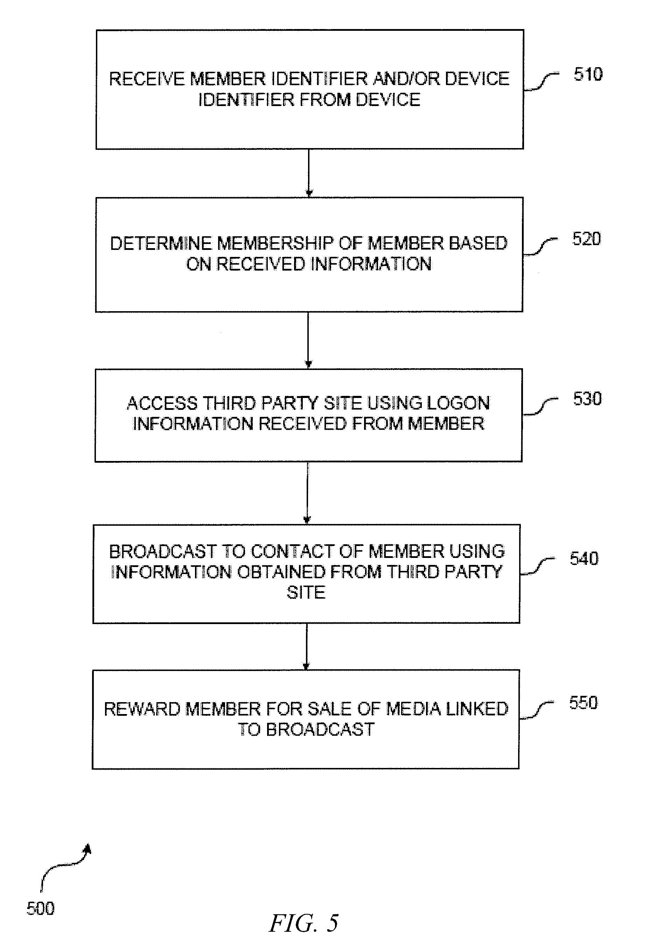

FIG. 5 illustrates an example process flow of a media sharing method 500 according to one embodiment of the present invention. Referring now to FIG. 5, method 500 starts at step 510 where a member identifier and/or a device identifier are received. In one embodiment, security application of computing device 110 may collect the member and device identifiers and transmit them to server 120.

At step 520, whether or not the user is a member of the exchange club is determined using one or more of the information received in step 510. If the user is not a member, the user may be solicited to join the exchange club.

At step 530, information provided by the member is used to access a social networking site. The information provided by the user may comprise login and password information. As mentioned, the social networking site may be a third-party social networking site. At step 540, one or more broadcasts are made to people in the member's contact list or to people in a broadcast list. At step 550, the member is reward for a sale made because of the broadcast.

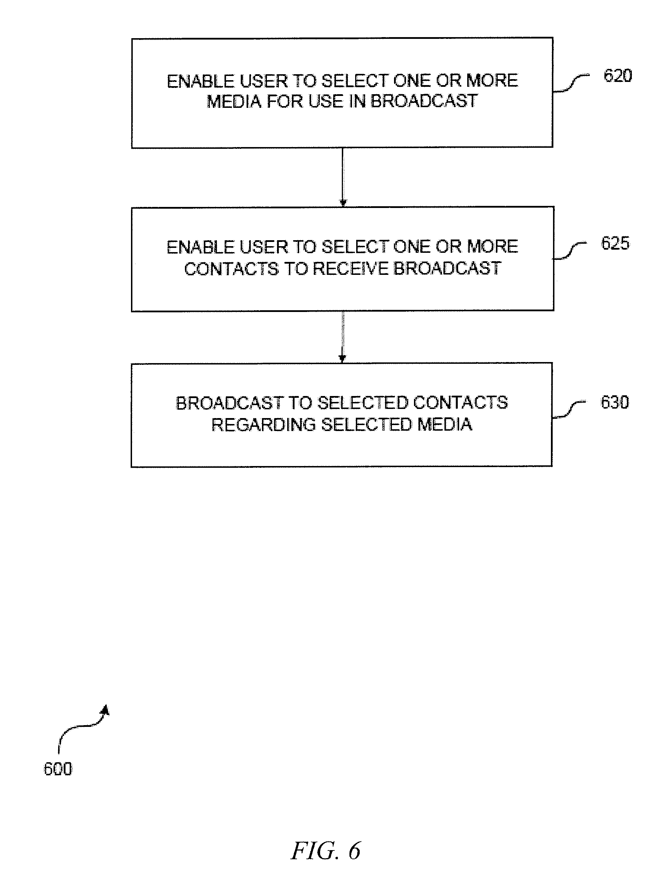

FIG. 6 illustrates an example process flow of a media sharing method 600 according to one embodiment of the present invention. Method 600 may be performed in addition to any of the methods 300-500. Referring now to FIG. 6, method 600 starts at step 620 where the user or member is allowed to select one or more media to be used in the broadcast. For example, per the membership information of a member, the member may own or have previously enjoyed ten various media. Thus, in one embodiment, server 120 may enable the member to select one or more of the ten media for broadcasting. At step 625, the member may be allowed to select one or more contacts from a list of contact to receive the broadcast. At step 630, the broadcast is made to persons selected at step 625 regarding the media selected at step 620.

In accordance with one or more embodiments of the present invention, there is provided an exemplary apparatus 700, in accordance to one embodiment of the present invention, that may be configured as either a computing device, or as a processor or similar device for use within a computing device. As illustrated, apparatus 700 may include: a means 750 for determining a membership status of the member, and a means 755 for accessing a third party social networking site using login information provided by the member.

Apparatus 700 may also include a means 760 for broadcasting the media to contacts of member using information from social networking site. This may involve using the site blogging or emailing tool. It may also involve obtaining information of other members using the member's contact list, blog, or log. A means 765 for rewarding member for sale of media because of broadcast may also be included in apparatus 700. A media may be tracked to the original broadcaster using various ways as discussed above.

It is noted that apparatus 700 may optionally include a processor module 730 having at least one processor, in the case of apparatus 700 configured as computing device, rather than as a processor. Processor 730, in such case, may be in operative communication with means 750-765, and components thereof, via a bus 710 or similar communication coupling. Processor 730 may effect initiation and scheduling of the processes or functions performed by means 750-765, and components thereof.

In further related aspects, apparatus 700 may optionally include a means for storing information, such as, for example, a memory device/module 740. Computer readable medium or memory device/module 740 may be operatively coupled to the other components of apparatus 700 via bus 710 or the like. The computer readable medium or memory device 740 may be adapted to store computer readable instructions and data for effecting the processes and behavior of means 750-765, and components thereof, or processor 730 (in the case of apparatus 700 configured as a computing device) or the methods disclosed herein.

In yet further related aspects, the memory module 740 may optionally include executable code for the processor module 730 to: (a) determine the exchange club membership status of the member; (b) access a social networking site using information provided by the member; (c) broadcast a media using the networking site or information obtained from the networking site; and (d) reward the member for any subsequent sale of a media that is directly linked to the broadcast of the media. One or more of steps (a)-(d) may be performed by processor module 730 in lieu of or in conjunction with the means 750-765 described above.

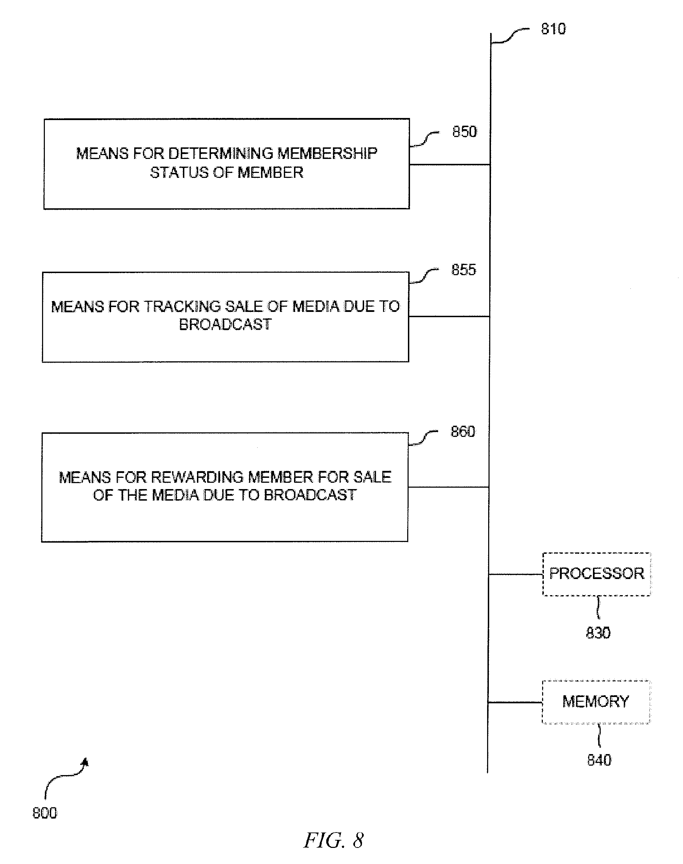

In accordance with one or more embodiments of the present invention, there are provided devices and apparatuses for sharing and/or broadcasting a media. The media broadcasting method may be performed from the server side. With reference to FIG. 8, there is provided an exemplary apparatus 800 that may be configured as either a computing device, or as a processor or similar device for use within a computing device. As illustrated, apparatus 800 may include a means 850 for determining the membership status of a user. If the user is not already a member of the exchange club, then the user may be solicited to join. Apparatus 800 may also include a means 855 for tracking the sale of the media resulting from of the broadcast. Additionally, apparatus 800 may include a means 860 for rewarding the member for sale of a media due to the broadcast.

It is noted that apparatus 800 may optionally include a processor module 830 having at least one processor, in the case of apparatus 800 configured as computing device, rather than as a processor. Processor 830, in such case, may be in operative communication with means 850-860, and components thereof, via a bus 810 or similar communication coupling. Processor 830 may effect initiation and scheduling of the processes or functions performed by means 850-860, and components thereof.

In further related aspects, apparatus 800 may optionally include a means for storing information, such as, for example, a memory device/module 840. Computer readable medium or memory device/module 840 may be operatively coupled to the other components of apparatus 800 via bus 810 or the like. The computer readable medium or memory device 840 may be adapted to store computer readable instructions and data for effecting the processes and behavior of means 850-860, and components thereof, or processor 830 (in the case of apparatus 800 configured as a computing device) or the methods disclosed herein.

In yet further related aspects, the memory module 840 may optionally include executable code for the processor module 830 to: (a) determine the exchange club membership status of the member; (b) track sale of a media because of the broadcast; and (c) reward the member for a sale of the media because of the broadcast. One or more of steps (a)-(c) may be performed by processor module 830 in lieu of or in conjunction with the means 850-860 described above.

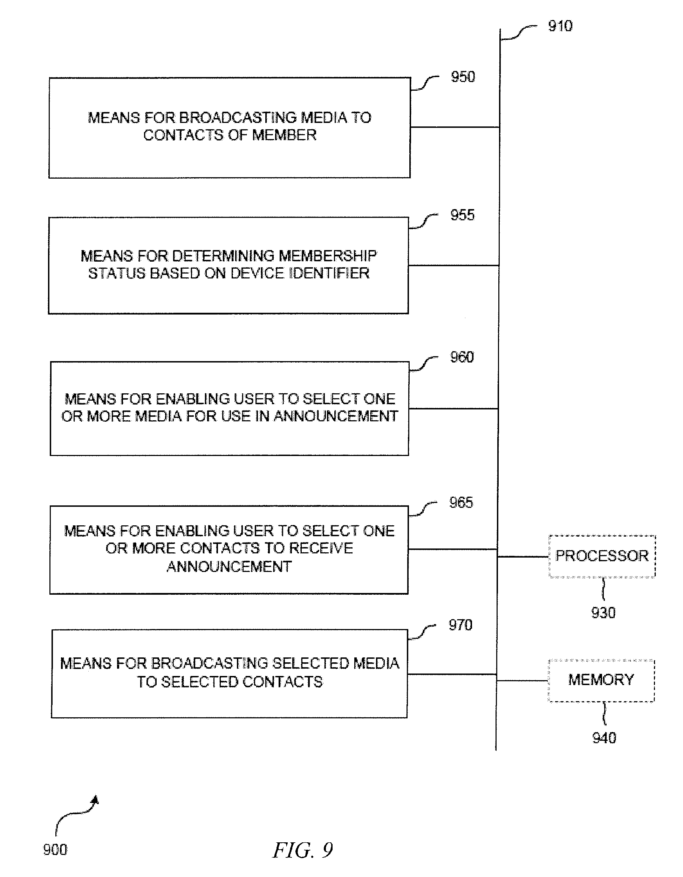

In accordance with one or more embodiments of the present invention, there are provided methods and apparatuses for distributing media. With reference to FIG. 9, there is provided an exemplary apparatus 900 that may be configured as either computing device, or as a processor or similar device for use within a computing device. Apparatus 900 may include a means 950 for broadcasting a media to one or more person in the member's contact list, and a means 955 for determining a membership status of the member. The status determination may be based on the device identifier received from the user's computing device 110. A means 960 for enabling the member to select one or more media for use in the broadcast may also be included in apparatus 900.

Apparatus 900 may also include a means 965 for enabling the member to select one or more persons in the member's contact list to receive the broadcast of the media. Additionally, a means 970 for broadcasting the selected media to a selected group of contacts.

It is noted that apparatus 900 may optionally include a processor module 930 having at least one processor, in the case of apparatus 900 configured as computing device, rather than as a processor. Processor 930, in such case, may be in operative communication with means 950-970, and components thereof, via a bus 910 or similar communication coupling. Processor 930 may effect initiation and scheduling of the processes or functions performed by means 950-970, and components thereof.

In further related aspects, apparatus 900 may optionally include a means for storing information, such as, for example, a memory device/module 940. Computer readable medium or memory device/module 940 may be operatively coupled to the other components of apparatus 900 via bus 910 or the like. The computer readable medium or memory device 940 may be adapted to store computer readable instructions and data for effecting the processes and behavior of means 950-970 and components thereof, or processor 930 (in the case of apparatus 900 configured as a computing device) or the methods disclosed herein.

In yet further related aspects, the memory module 940 may optionally include executable code for the processor module 930 to: (a) broadcast a media to one or more persons of member's contact; (b) determine membership status based on the device identifier; (c) enable the member to select one or more media for broadcasting; (d) enable the member to select one or more persons from the member's contact list to receive the broadcast of the media; (d) broadcast the media to various people; and (e) reward the member for at least one of the broadcast that result in a sale of the media. One or more of steps (a)-(e) may be performed by processor module 930 in lieu of or in conjunction with the means 950-970 described above.

While the present invention has been illustrated and described with particularity in terms of preferred embodiments, it should be understood that no limitation of the scope of the invention is intended thereby. Features of any of the foregoing methods and devices may be substituted or added into the others, as will be apparent to those of skill in the art. It should also be understood that variations of the particular embodiments described herein incorporating the principles of the present invention will occur to those of ordinary skill in the art and yet be within the scope of the invention.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical disks (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method for sharing media on a social network, the method comprising:
accessing a social networking site using login information provided by a member;
broadcasting an advertisement of a media to contacts of the member using information obtained from the social networking site; and
rewarding the member for any purchase of the media resulting from the broadcasting.

2. The method of claim 1, wherein the social networking site is a third party social networking site.

3. The method of claim 1, wherein broadcasting the advertisement comprises creating a blog entry about the media.

4. The method of claim 1, wherein broadcasting the advertisement comprises sending an email to contacts of the member about the media.

5. The method of claim 1, further comprising:
receiving a member identifier from a device; and
determining a membership status of the member using the member identifier.

6. The method of claim 1, wherein the advertisement comprises a link to the media.

7. The method of claim 1, further comprising:
receiving a device identifier from the device; and
determining the membership status using the device identifier, wherein the device identifier is generated using one or more parameters of the device.

8. The method of claim 1, wherein the media comprises one or more items selected from the list consisting of music, software applications, movies, and books.

9. The method of claim 1, further comprising enabling the member to select one or more media from a list for the broadcasting of advertisement.

10. The method of claim 2, wherein the third party social networking site comprises a social networking site selected from the list consisting of a free email service, a blogging service, and a social networking service.

11. An apparatus for sharing media on a social network, the apparatus comprising:
means for determining a membership status of the member using a member identifier;
means for accessing a social networking site using login information provided by the member; and
means for broadcasting an advertisement of a media to contacts of the member using the social networking site.

12. The apparatus of claim 11, further comprising means for rewarding the member for a purchase of the media because of the broadcasting.

13. The apparatus of claim 11, wherein the means for broadcasting the advertisement comprises means for creating a blog entry about the media.

14. The apparatus of claim 11, wherein the means for broadcasting the advertisement comprises means for sending an email to contacts of the member about the media.

15. The apparatus of claim 13, wherein the advertisement comprises a link to the media.
